(19)

Europäisches
Patentamt
European
Patent Office
Office européen
des brevets

(11) **EP 4 641 704 A1**

(12) **EUROPEAN PATENT APPLICATION**

(43) Date of publication:
**29.10.2025 Bulletin 2025/44**

(21) Application number: 25161285.9

(22) Date of filing: **03.03.2025**

(51) International Patent Classification (IPC):
*H01M 4/62* (2006.01)          *H01M 4/66* (2006.01)
*H01M 10/42* (2006.01)          *H01M 4/02* (2006.01)

(52) Cooperative Patent Classification (CPC):
**H01M 4/62; H01M 4/667; H01M 10/4235;**
H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.04.2024 KR 20240054306**

(71) Applicant: **SAMSUNG SDI CO., LTD.
Yongin-si, Gyeonggi-do 17084 (KR)**

(72) Inventors:
- **KIL, Ki Chun**
  **17084 Yongin-si (KR)**
- **JEONG, Hohyun**
  **17084 Yongin-si (KR)**
- **SONG, Yeji**
  **17084 Yongin-si (KR)**
- **JEON, Seunghyun**
  **17084 Yongin-si (KR)**
- **HAN, Seung-Hun**
  **17084 Yongin-si (KR)**

(74) Representative: **Marks & Clerk LLP
15 Fetter Lane
London EC4A 1BW (GB)**

(54) **POSITIVE ELECTRODES FOR RECHARGEABLE LITHIUM BATTERIES AND RECHARGEABLE LITHIUM BATTERIES INCLUDING THE SAME**

(57)      Disclosed are a positive electrode for a rechargeable lithium battery, and a rechargeable lithium battery including the positive electrode, the positive electrode including a positive electrode current collector; a safety functional layer on the positive electrode current collector, and a positive electrode active material layer on the safety functional layer, wherein the safety functional layer includes a first safety functional layer including a lithium iron phosphate-based compound and a second safety functional layer including an endothermic material.

【FIG. 1】

EP 4 641 704 A1

Description

BACKGROUND

1. Field

Positive electrodes for rechargeable lithium batteries, and rechargeable lithium batteries including the positive electrodes, are disclosed.

2. Description of the Related Art

With the spread of electronic devices that use batteries, such as, e.g., mobile phones, laptop computers, electric vehicles, and the like, the demand for rechargeable batteries with high energy density and high capacity is increasing.
A rechargeable lithium battery includes a positive electrode and a negative electrode including an active material capable of intercalating and deintercalating lithium ions, and an electrolyte, and electrical energy is produced through oxidation and reduction reactions when lithium ions are intercalated/deintercalated from the positive electrode and negative electrode.
When a sharp object (e.g., a nail) penetrates a rechargeable lithium battery, a short circuit may occur as a negative electrode and a positive electrode come into contact. This short circuit may cause internal heat generation in the rechargeable lithium battery and further cause ignition.
Meanwhile, when a rechargeable lithium battery is exposed to a high temperature environment, the structure of the positive electrode active material collapses, and oxygen radicals are generated, causing oxidative decomposition of the electrolyte solution. This oxidative decomposition of the electrolyte may be another cause of internal heat generation and ignition of the rechargeable lithium battery.
Accordingly, a method to reduce or suppress internal heat generation and ignition of rechargeable lithium batteries, and to ensure safety in various situations such as penetration by sharp objects and exposure to high temperatures, may be advantageous.

SUMMARY

Some example embodiments include a positive electrode that reduces or suppresses internal heat generation and ignition of a rechargeable lithium battery, and ensures safety in various situations such as penetration by a sharp object or exposure to high temperatures.
Some example embodiments include a rechargeable lithium battery including the positive electrode.
Some example embodiments include a positive electrode for a rechargeable lithium battery including a positive electrode current collector, a safety functional layer on the positive electrode current collector, and a positive electrode active material layer on the safety functional layer, wherein the safety functional layer includes a first safety functional layer including a lithium iron phosphate-based compound and a second safety functional layer including an endothermic material.
Some example embodiments include a rechargeable lithium battery including the positive electrode, a negative electrode, and an electrolyte.
At least some of the above and other features of the invention are set out in the claims.
The positive electrode according to some example embodiments can ensure safety by reducing or suppressing heat generation and ignition of a rechargeable lithium battery in various situations, such as, e.g., penetration by a sharp object, or exposure to high temperatures.

BRIEF DESCRIPTION OF THE DRAWINGS

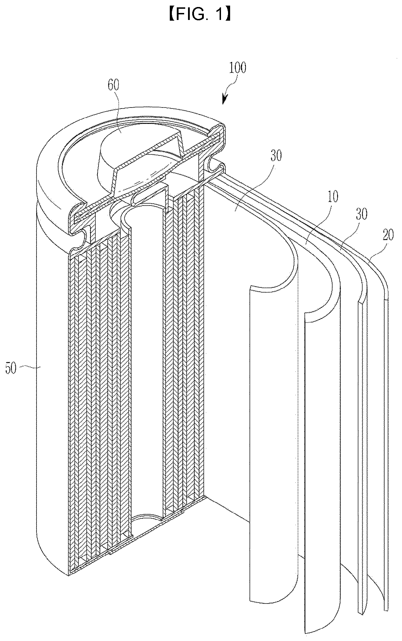

FIGS. 1 to 4 are schematic views illustrating rechargeable lithium batteries, according to some example embodiments.

DETAILED DESCRIPTION

Hereinafter, example embodiments will be described in detail. However, these embodiments are examples, the present disclosure is not limited thereto and the present disclosure is defined by the scope of claims.
As used herein, when specific definition is not otherwise provided, it will be understood that when an element such as a layer, film, region, or substrate is referred to as being "on" another element, it can be directly on the other element or intervening elements may also be present.

As used herein, when a specific definition is not otherwise provided, the singular may also include the plural. In addition, unless otherwise specified, "A or B" may mean "including A, including B, or including A and B."

As used herein, "combination thereof" may mean a mixture of a stack, a composite, a copolymer, an alloy, a blend, and a reaction product of constituents.

As used herein, a D50 particle diameter and a D90 particle diameter may mean the diameter of a particle with a cumulative volume of 50 volume% (D50) and the diameter of a particle with a cumulative volume of 90 volume% (D90) in the particle size distribution, respectively. The D50 particle diameter and D90 particle diameter can be measured by methods well known to those skilled in the art, for example, by measuring with a particle size analyzer, a transmission electron microscope or scanning electron microscope, or a scanning electron microscope. Alternatively, a dynamic light-scattering measurement device is used to perform a data analysis, and the number of particles is counted for each particle size range. From this, the D50 particle diameter and D90 particle diameter can be obtained. A laser diffraction method may also be used. When measuring by laser diffraction, for example, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the D50 particle diameter based on 50% of the particle size distribution and the D90 particle diameter based on 90% of the particle size distribution in the measuring device can be calculated. When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

**Positive Electrode**

Some example embodiments include a positive electrode for a rechargeable lithium battery including a positive electrode current collector, a safety functional layer on the positive electrode current collector, and a positive electrode active material layer on the safety functional layer, wherein the safety functional layer includes a first safety functional layer including a lithium iron phosphate-based compound and a second safety functional layer including an endothermic material.

The positive electrode according to some example embodiments is obtained by disposing the first safety functional layer with a current reducing function and the second safety functional layer with an endothermic function, when a short circuit occurs and/or exposed to high temperatures, between the positive electrode current collector and the positive electrode active material layer.

The lithium iron phosphate-based compound is or includes a positive electrode active material with high resistance, and may reduce a current, when a short circuit occurs due to penetration of a rechargeable lithium battery by a sharp object.

In addition, the endothermic material, which is a material with an endothermic function, may absorb heat, even when the heat inside the rechargeable lithium battery is generated due to the penetration by a sharp object, the exposure to high temperatures, and the like.

Accordingly, the positive electrode according to some example embodiments, as a result of interposing the first safety functional layer with a current reducing function and the second safety functional layer with an endothermic function, when a short circuit occurs and/or exposed to high temperatures, between the positive electrode current collector and the positive electrode active material layer, may secure safety by reducing or suppressing exothermicity and ignition of the rechargeable lithium battery in various situations such as penetration by a sharp object, exposure to high temperatures, and the like.

An order of disposing the first safety functional layer and the second safety functional layer is not limited, but compared with an order of disposing positive electrode current collector/second safety functional layer/first safety functional layer/positive electrode active material layer, an order of disposing positive electrode current collector/first safety functional layer/second safety functional layer/positive electrode active material layer may be desirable.

As for the latter, when penetrated by a sharp object, the first safety functional layer may first come into contact and effectively exhibit a current reducing function, when a short circuit occurs, and the second safety functional layer may first come into contact with heat generated inside the rechargeable lithium battery and effectively exhibit an exothermic function.

Endothermic Material

The endothermic material may be or include a composite particle including a metal hydroxide and a phosphorus (P)-based flame retardant.

The metal hydroxide has an endothermic function, and the phosphorus-based flame retardant has an oxygen radical capture function and combustion resistance function.

Accordingly, the endothermic material captures oxygen radicals generated by structural collapse of the positive electrode active material when the rechargeable lithium battery is exposed to a high temperature environment (oxygen radical capture function), and even when heat is generated inside the rechargeable lithium battery, the rechargeable lithium battery absorbs the heat (endothermic function) and delays combustion of the rechargeable lithium battery to reduce or suppress ignition (combustion resistance function).

Here, "composite" refers to a state in which the functional group (e.g., hydroxyl group) of the metal hydroxide and the functional group (e.g., phosphoric acid group) of the phosphorus-based flame retardant are chemically bonded to each other to form a single mass of a plurality of particles.

Additionally, "chemical bond" includes various types of bonds such as covalent bonds, ionic bonds, coordination bonds, and metallic bonds. The bonding between particles can be confirmed by, for example, X-ray photoelectron spectroscopy.

In detail, a plurality of the metal hydroxide particles and a plurality of the phosphorus-based flame retardant particles may chemically be bonded with each other to form secondary particles, and within the secondary particles, the phosphorus-based flame retardant particles may be present on the surface and internal pores of the metal hydroxide particles.

When analyzing the endothermic material using a mass spectrometer according to Thermal Desorption Spectroscopy (TDS), an amount of $P_2$ gas (MS1) desorbed from 80 °C to 1400 °C may be about $200 \times 10^{-6}$ to about $2500 \times 10^{-6}$ mol/g, about $300 \times 10^{-6}$ to about $2000 \times 10^{-6}$ mol/g, or about $400 \times 10^{-6}$ to about $1800 \times 10^{-6}$ mol/g.

When analyzing the endothermic material using a mass spectrometer according to Thermal Desorption Spectroscopy (TDS), an amount of $H_2O$ gas (MS2) desorbed from 80 °C to 200 °C may be about $50 \times 10^{-6}$ to about $1000 \times 10^{-6}$ mol/g, about $100 \times 10^{-6}$ to about $9500 \times 10^{-6}$ mol/g, or about $300 \times 10^{-6}$ to about $900 \times 10^{-6}$ mol/g.

The endothermic material may satisfy Equation 1:

$$\text{Equation 1}$$

$$0.5 \leq (MS1/MS2) \leq 10.0$$

For example, the endothermic material may satisfy the following equation 1-1:

$$\text{Equation 1-1}$$

$$0.5 \leq (MS1/MS2) \leq 5.0$$

For example, the endothermic material may satisfy Equation 1-2:

$$\text{Equation 1-2}$$

$$0.8 \leq (MS1/MS2) \leq 3.0$$

When the endothermic material satisfies Equation 1, Equation 1-1, or Equation 1-2, safety can be improved without deteriorating the performance of the rechargeable lithium battery.

The endothermic material desirably has a content of Al (aluminium) element and P (phosphorus) element measured during analysis using inductively coupled plasma atomic emission spectroscopy (ICP-AES) within the following range.

The aluminium element may be included in an amount of about 5 wt% to about 30 wt%, or about 5 wt% to about 25 wt%; and the phosphorus element may be included in an amount of about 5 wt% to about 30 wt%, or about 5 wt% to about 25 wt% based on the total amount of 100 wt% of the endothermic material.

Contents of the aluminium element and phosphorus element in the endothermic material can be controlled by the type and amount of the metal hydroxide and flame retardant used in the production of the endothermic material.

The metal hydroxide may be or include at least one of aluminium hydroxide, bohemite, pseudobohemite, alumina, kaolinite, or a combination thereof. For example, the metal hydroxide may be or include aluminium hydroxide.

The D50 particle diameter of the metal hydroxide may be about 10 nm to about 10 $\mu$m, about 50 nm to about 5 $\mu$m, or about 0.1 to about 3 $\mu$m.

The phosphorus-based flame retardants may include at least one of phosphoric acid, phosphoric acid ester, and phosphonic acid, phosphinic acid, or a combination thereof. For example, the flame retardant may be or include at least one of phosphoric acid, phenyl phosphate, phenyl phosphoric acid, diphenyl phosphate, diphenyl phosphoric acid, methyl phosphinic acid, phenyl phosphonic acid, methyl phosphonic acid, phenyl phosphonic acid, or a combination thereof.

The metal hydroxide may be included in an amount of about 1 wt% to about 60 wt%, about 5 wt% to about 50 wt%, or about 10 wt% to about 40 wt%; and the phosphorus-based flame retardant may be included in an amount of about 0.1 wt% to about 25 wt%, about 0.5 wt% to about 20 wt%, or about 1 wt% to about 15 wt% based on a total amount of 100 wt% of the endothermic material.

The endothermic material may have a Brunauer, Emmett and Teller (BET) specific surface area calculated by an adsorption isotherm measured by adsorbing nitrogen of about 8 $m^2/g$ to about 150 $m^2/g$, about 10 $m^2/g$ to about 120 $m^2/g$, or about 35 $m^2/g$ to about 100 $m^2/g$.

The BET specific surface area of the endothermic material tends to decrease when the amount of the flame retardant is increased compared to the metal hydroxide, or the reaction time when combining the metal hydroxide and the flame retardant is lengthened.

In order to make composite particles including more of the flame retardant, it is desirable to use a metal hydroxide as a starting material with a specific surface area as large as possible. The specific surface area of the metal hydroxide may be, for example, about 100 $m^2/g$ to about 500 $m^2/g$.

The endothermic material may have a D50 particle diameter of about 0.05 $\mu$m to about 3 $\mu$m, about 0.1 $\mu$m to about 2 $\mu$m, or about 0.5 $\mu$m to about 1.5 $\mu$m. Additionally, the endothermic material may have a D90 particle diameter of about 0.05 $\mu$m to about 5 $\mu$m, about 2 $\mu$m to about 5 $\mu$m, or about 2.5 $\mu$m to about 5 $\mu$m.

The smaller the D50 particle diameter and D90 particle diameter of the endothermic material, the thinner and more uniform the thickness of the safety functional layer can be.

The D50 particle diameter and D90 particle diameter of the endothermic material can each be controlled by the preparing conditions of the endothermic material. For example, when preparing the endothermic material, increasing the temperature or increasing the stirring speed can reduce the D50 particle diameter and D90 particle diameter of the endothermic material, respectively.

Preparing Method of Endothermic Material

The endothermic material can be produced by heating a dispersion of a metal hydroxide and a flame retardant.

As a solvent for the dispersion, a mixed solvent of water and an organic solvent can be used. As the organic solvent, an alcohol-based organic solvent such as ethanol or 2-propanol can be used.

The heating may be performed at a temperature range of about 40 °C to about 100 °C, or about 60 °C to about 80 °C, for about 1 hour to about 48 hours, or about 5 hours to about 30 hours.

During the heating, the dispersion can be stirred at a speed of about 50 m/min to about 1000 m/min, or about 200 m/min to about 800 m/min.

After the heating, the endothermic material can be finally obtained by filtering with filter paper.

That the endothermic material is finally obtained can be confirmed based on whether the $P_2$ gas mass and $H_2O$ gas mass according to the thermal desorption spectroscopy respectively satisfy the above-mentioned ranges.

Lithium Iron Phosphate-based Compound

The lithium iron phosphate-based compound may be represented by Chemical Formula 1:

$$\text{Chemical Formula 1} \qquad Li_aFe_{1-x1}M_{x1}PO_4$$

In Chemical Formula 1, $0.90 \leq a \leq 1.8$, $0 \leq x1 \leq 0.7$, M is Mg, Co, Ni, or a combination thereof.

For example, the lithium iron phosphate-based compound may be or include $LiFePO_4$.

Endothermic Material

First Binder

The first safety functional layer may further include a first binder.

The first binder may be included in an amount of about 1 wt% to about 30 wt%, about 3 wt% to about 20 wt%, or about 5 wt% to about 10 wt% based on a total amount of 100 wt% of the first safety functional layer.

The first binder is configured to ensure that the components of the first safety functional layer adhere to each other, and also to adhere the components of the first safety functional layer to the positive electrode current collector or the second safety functional layer, and representative examples may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, etc., but are not limited thereto.

Second Binder

The second safety functional layer may further include a second binder.

The second binder may be included in an amount of about 1 wt% to about 30 wt%, or about 1 wt% to about 20 wt% based on a total amount of 100 wt% of the second safety functional layer.

The second binder is configured to adhere the components of the second safety functional layer to each other and to the positive electrode current collector or the first safety functional layer, and representative examples may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, epoxy resin, nylon, etc., but are not limited thereto.

Thicknesses of First Safety Functional Layer and Second Safety Functional Layer

The total thickness of the first safety functional layer and the second safety functional layer may be about 0.1 $\mu$m to about 3 $\mu$m, about 1 $\mu$m to about 3 $\mu$m, or about 2 $\mu$m to about 3 $\mu$m.

The thickness ratio of the first safety functional layer and the second safety functional layer may be about 10:1 to about 1:10, about 5:1 to about 1:5, or about 5:1 to about 1:1.

Within the above range, the cycle-life of the rechargeable lithium battery can be improved while the probability of ignition is lowered and the interfacial resistance is reduced.

**Rechargeable Lithium Battery**

Some example embodiments include a rechargeable lithium battery including the positive electrode; a negative electrode; and an electrolyte.

As the rechargeable lithium battery according to some example embodiments includes the positive electrode, heat generation and ignition can be reduced or suppressed and safety can be ensured even in various situations such as penetration by a sharp object or exposure to high temperatures.

Hereinafter, descriptions that overlap with those described above will be omitted, and a rechargeable lithium battery according to some example embodiments will be described in detail.

Positive Electrode Active Material

The positive electrode active material may be or include a compound (lithiated intercalation compound) capable of intercalating and deintercalating lithium. For example, one or more types of composite oxides of lithium and a metal including at least one of cobalt, manganese, nickel, and a combination thereof may be used.

The composite oxide may be or include a lithium transition metal composite oxide, and examples may include at least one of lithium nickel-based oxide, lithium cobalt-based oxide, lithium manganese-based oxide, a lithium iron phosphate-based compound, a cobalt-free lithium nickel-manganese-based oxide, or a combination thereof.

As an example, a compound represented by any of the following chemical formulas may be used. $Li_aA_{1-b}X_bO_{2-c}D_c$ (0.90≤a≤1.8, 0≤b≤0.5, 0≤c≤0.05); $Li_aMn_{2-b}X_bO_{4-c}D_c$ (0.90≤a≤1.8, 0≤b≤0.5, 0≤c≤0.05); $Li_aNi_{1-b-c}Co_bX_cO_{2-\alpha}D_\alpha$ (0.90≤a≤1.8, 0≤b≤0.5, 0≤c≤0.5, 0<$\alpha$<2); $Li_aNi_{1-b-c}Mn_bX_cO_{2-\alpha}D_\alpha$ (0.90≤a≤1.8, 0≤b≤0.5, 0≤c≤0.5, 0<$\alpha$<2); $Li_aNi_bCo_cL^1_{d-}G_eO_2$ (0.90≤a≤1.8, 0≤b≤0.9, 0≤c≤0.5, 0≤d≤0.5, 0≤e≤0.1); $Li_aNiG_bO_2$ (0.90≤a≤1.8, 0.001≤b≤0.1); $Li_aCoG_bO_2$ (0.90≤a≤1.8, 0.001≤b≤0.1); $Li_aMn_{1-b}G_bO_2$ (0.90≤a≤1.8, 0.001≤b≤0.1); $Li_aMn_2G_bO_4$ (0.90≤a≤1.8, 0.001≤b≤0.1); $Li_aMn_{1-g}G_gPO_4$ (0.90≤a≤1.8, 0≤g≤0.5); $Li_{(3-f)}Fe_2(PO_4)_3$ (0≤f≤2); $Li_aFePO_4$ (0.90≤a≤1.8).

In the above chemical formulas, A is Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may include, for example, or includes at least one of a lithium nickel-based oxide represented by Chemical Formula 11, a lithium cobalt-based oxide represented by Chemical Formula 12, a lithium iron phosphate-based compound represented by Chemical Formula 13, and a cobalt-free lithium nickel-manganese-based oxide represented by Chemical Formula 14, or a combination thereof.

Chemical Formula 11 $\quad\quad Li_{a1}Ni_{x1}M^1_{y1}M^2_{z1}O_{2-b1}X_{b1}$

In Chemical Formula 11, $0.9 \leq a1 \leq 1.8$, $0.3 \leq x1 \leq 1$, $0 \leq y1 \leq 0.7$, $0 \leq z1 \leq 0.7$, $0.9 \leq x1+y1+z1 \leq 1.1$, and $0 \leq b1 \leq 0.1$, $M^1$ and $M^2$ each independently are or include one or more elements including at least one of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 1, for example, $0.6 \leq x1 \leq 1$, $0 \leq y1 \leq 0.4$, and $0 \leq z1 \leq 0.4$, or $0.8 \leq x1 \leq 1$, $0 \leq y1 \leq 0.2$, and $0 \leq z1 \leq 0.2$.

$$\text{Chemical Formula 12} \qquad Li_{a2}Co_{x2}M^3{}_{y2}O_{2-b2}X_{b2}$$

In Chemical Formula 12, $0.9 \leq a2 \leq 1.8$, $0.7 \leq x2 \leq 1$, $0 \leq y2 \leq 0.3$, $0.9 \leq x2+y2 \leq 1.1$, and $0 \leq b2 \leq 0.1$, $M^3$ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

$$\text{Chemical Formula 13} \qquad Li_{a3}Fe_{x3}M^4{}_{y3}PO_{4-b3}X_{b3}$$

In Chemical Formula 13, $0.9 \leq a3 \leq 1.8$, $0.6 \leq x3 \leq 1$, $0 \leq y3 \leq 0.4$, and $0 \leq b3 \leq 0.1$, $M^4$ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

$$\text{Chemical Formula 14} \qquad Li_{a4}Ni_{x4}Mn_{y4}M^5{}_{z4}O_{2-b4}X_{b4}$$

In Chemical Formula 14, $0.9 \leq a4 \leq 1.8$, $0.8 \leq x4 < 1$, $0 < y4 \leq 0.2$, $0 \leq z4 \leq 0.2$, $0.9 \leq x4+y4+z4 \leq 1.1$, and $0 \leq b4 \leq 0.1$, $M^5$ is or includes one or more of Al, B, Ba, Ca, Ce, Cr, Fe, Mg, Mo, Nb, Si, Sn, Sr, Ti, V, W, and Zr, and X is or includes one or more of F, P, and S.

As an example, the positive electrode active material may be or include a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of metals excluding lithium in the lithium transition metal composite oxide. The high-nickel-based positive electrode active materials described above can achieve high capacity and can be applied to high-capacity, high-density rechargeable lithium batteries.

Positive Electrode

The positive electrode includes a positive electrode current collector; a safety functional layer on the positive electrode current collector; and a positive electrode active material layer on the safety functional layer.

The positive electrode active material layer may include a positive electrode active material and may further include a binder and/or a conductive material.

For example, the positive electrode may further include an additive that can constitute a sacrificial positive electrode.

An amount of the positive electrode active material may be about 90 wt% to about 99.5 wt% based on 100 wt% of the positive electrode active material layer, and each, or at least one, of the amount of the binder and the conductive material may be about 0.5 wt% to about 5 wt%, based on 100 wt% of the positive electrode active material layer.

The binder is configured to attach the positive electrode active material particles to each other, and also to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including at least one of ethylene oxide, polyvinylpyrrolidone, polyurethane, polytetrafluoroethylene, polyvinylidene fluoride, polyethylene, polypropylene, a styrene-butadiene rubber, a (meth) acrylated styrene-butadiene rubber, an epoxy resin, a (meth)acrylic resin, a polyester resin, nylon, and the like, but are not limited thereto.

The conductive material is included to provide electrode conductivity, and any electrically conductive material may be a conductive material unless the electrically conductive material causes a chemical change to the battery. Examples thereof may be or include a carbon-based material such as at least one of natural graphite, artificial graphite, carbon black, acetylene black, ketjen black, a carbon fiber, a carbon nanofiber, a carbon nanotube, and the like; a metal-based material such as at least one of copper, nickel, aluminium, silver, and the like in a form of a metal powder or a metal fiber; a conductive polymer such as a polyphenylene derivative; or a mixture thereof.

The current collector may include Al, but is not limited thereto.

Negative Electrode Active Material

The negative electrode active material may be or include a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon-based negative electrode active material, for example, crystalline carbon, amorphous carbon or a combination thereof. The crystalline carbon may be or include graphite such as, e.g., at least one of irregular-shaped, sheet-shaped, flake-shaped, sphere-shaped, or fiber-shaped natural graphite or artificial graphite. The amorphous carbon may be or include a soft carbon, a hard carbon, a mesophase pitch carbonization product, calcined coke, and the like.

The lithium metal alloy may include lithium and a metal that includes at least one of from Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ $(0 < x \leq 2)$, a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnO_2$, a Sn-based alloy, or a combination thereof.

The silicon-carbon composite may be or include a composite of silicon and amorphous carbon. According to some example embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material, or the Sn-based negative electrode active material, may be used in combination with a carbon-based negative electrode active material.

Negative Electrode

The negative electrode for a rechargeable lithium battery includes a current collector and a negative electrode mixture layer on the current collector. The negative electrode mixture material layer includes a negative electrode active material and may further include a binder and/or a conductive material.

For example, the negative electrode active mixture layer may include about 90 wt% to about 99 wt% of the negative electrode active material, about 0.5 wt% to about 5 wt% of the binder, and about 0 wt% to about 5 wt% of the conductive material.

The binder may attach the negative electrode active material particles to each other and also to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is the negative electrode binder, the aqueous binder may further include a cellulose-based compound capable of imparting viscosity. The cellulose-based compound includes one or more of carboxylmethyl cellulose, hydroxypropylmethyl cellulose, methyl cellulose, or alkali metal salts thereof. The alkali metal may be or include one or more of Na, K, or Li.

The dry binder may be or include a polymer material capable of being fiberized, and may be or include, for example, at least one of polytetrafluoroethylene, polyvinylidene fluoride, polyvinylidene fluoride-hexafluoropropylene copolymer, polyethylene oxide, or a combination thereof.

The conductive material is included to provide electrode conductivity, and any electrically conductive material may constitute a conductive material unless the electrically conductive material causes a chemical change to the battery. Examples of the conductive material may be or include a carbon-based material such as at least one of natural graphite, artificial graphite, carbon black, acetylene black, ketjen black, a carbon fiber, a carbon nanofiber, a carbon nanotube, and the like; a metal-based material such as at least one of copper, nickel, aluminium, silver, and the like in a form of a metal powder or a metal fiber; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof, but is not limited thereto.

Electrolyte

The electrolyte for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, alcohol-based solvent, aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethylacetate, methylpropionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone. The alcohol-based solvent may include ethyl alcohol, isopropyl alcohol, and the like, and the aprotic solvent may include nitriles such as at least one of R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and the like.

The non-aqueous organic solvent may be used alone or as a mixture of two or more.

Additionally, when using a carbonate-based solvent, cyclic carbonate and chain carbonate can be mixed and used, and cyclic carbonate and chain carbonate can be mixed at a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of a lithium salt may include one or more than one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_3)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers from 1 to 20), lithium trifluoromethane sulfonate, lithium tetrafluoroethanesulfonate, lithium difluorobis(oxalato)phosphate, (LiDFBOP), and lithium bis(oxalato)borate (LiBOB).

Separator

The rechargeable lithium battery may further include a separator between the negative electrode and the positive electrode, depending on the kind of battery. Examples of a suitable separator material include at least one of polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The separator may include a porous substrate and a coating layer including an organic material, an inorganic material, or a combination thereof on one or both surfaces of the porous substrate.

The porous substrate may be or include a polymer film formed of or including any one of a polymer, or a copolymer or mixture of two or more of polyolefins including at least one of polyethylene or polypropylene, a polyester such as polyethyleneterephthalate, or polybutyleneterephthalate, polyacetal, polyamide, polyimide, polycarbonate, polyether ketone, polyaryl ether ketone, polyether imide, polyamideimide, polybenzimidazole, polyether sulfone, polyphenylene oxide, a cyclic olefin copolymer, polyphenylene sulfide, polyethylene naphthalate, a glass fiber, TEFLON (tetrafluoroethylene), and polytetrafluoroethylene.

The organic material may include a polyvinylidene fluoride-based polymer or a (meth)acrylic-based polymer.

The inorganic material may include inorganic particles including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

Rechargeable Lithium Battery

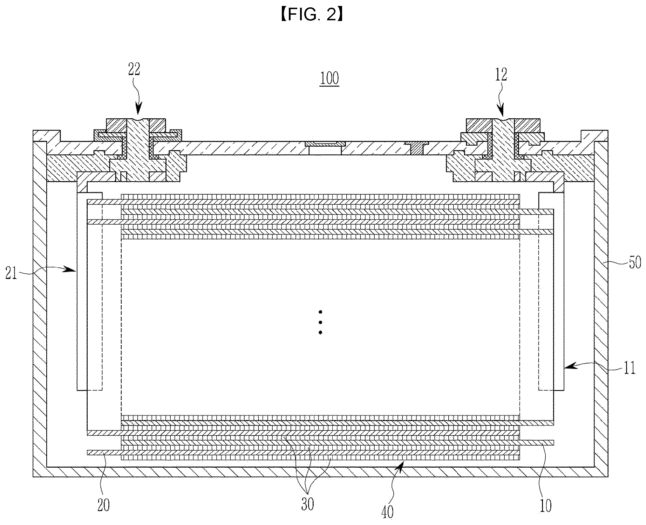

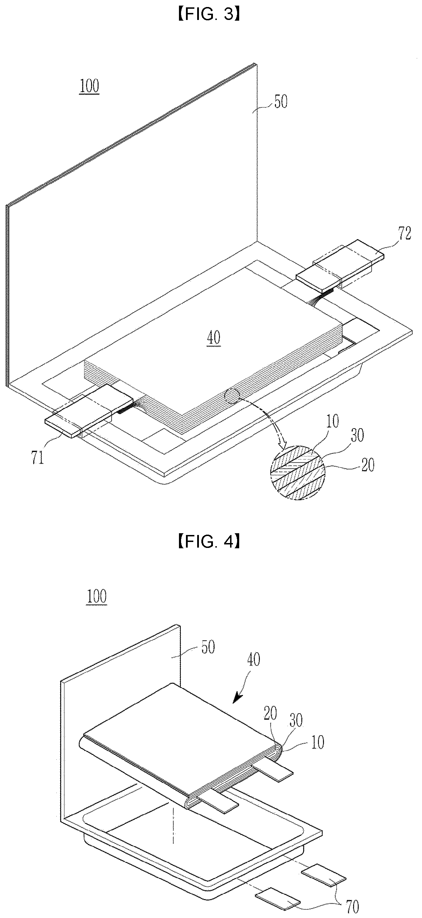

The rechargeable lithium battery may be classified into cylindrical, prismatic, pouch, or coin-type batteries, and the like depending on the shape of the battery. FIGS. 1 to 4 are schematic views illustrating a rechargeable lithium battery according to an example embodiment. FIG. 1 illustrates a circular battery, FIG. 2 illustrates a prismatic battery, and FIGS. 3 and 4 illustrate pouch-type batteries. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, negative electrode 20, and separator 30 may be impregnated with an electrolyte (not shown). The rechargeable lithium battery 100 may include a sealing member 60 that seals the case 50 as shown in FIG. 1. In addition, in FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 includes an electrode tab 70 illustrated in FIG. 4, that is, a positive electrode tab 71 and a negative electrode tab 72 illustrated in FIG. 3 and forming an electrical path for inducing the current formed in the electrode assembly 40 to the outside of the battery 100.

The rechargeable lithium battery according to some example embodiments may be applied to automobiles, mobile phones, and/or various types of electrical devices, but the present disclosure is not limited thereto.

Hereinafter, examples of the present disclosure and comparative examples are described. These examples, however, are not in any sense to be interpreted as limiting the scope of the disclosure.

**Preparation Example 1**

1.0 g of aluminium hydroxide (D50: 1.2 $\mu$m, BET: 212 m$^2$/g) and 5.0 g of methyl phosphinic acid were dispersed in 50 cc of a solvent prepared by mixing distilled water and ethanol in a volume ratio of 1:1.

After stirring the dispersion at 300 m/min for 24 hours at 70 °C, a solid formed therein was filtered, washed with water ethanol, and vacuum-dried to obtain an endothermic material.

**Reference Example**

The endothermic material of Preparation Example 1 was analyzed as follows.

(1) Desorbed Gas Mass

The endothermic material of Preparation Example 1 was measured with respect to each amount of desorbed $P_2$ gas (MS1) from 80 °C to 1400 °C and desorbed $H_2O$ gas (MS2) from 80 °C to 200 °C by using a mass spectrometer (Product name: TDS-1200, Manufacturer: ESCO, Ltd.) according to thermal desorption spectroscopy.

For example, the endothermic material of Preparation Example 1 as a sample was taken by 1 mg, which was corrected to an actual weight. The sample was set in a sample dish made of SiC on a sample stage made of quartz. A surface temperature of the sample was increased from 80 °C to 1400 °C at 60 °C/min.

A mass of gas desorbed from the sample was measured by using a quadrupole mass analyzer under a voltage of 1000 V. However, an amount of $P_2$ gas (MS1) was measured as a cumulative value from 80 °C to 1400 °C, and an amount of $H_2O$ gas (MS2) was measured as a cumulative value from 80 °C to 200 °C. The measurement value was interpreted by using a mass number [M/z] with $H_2O$ of 18.

The measurement result showed that the endothermic material of Preparation Example 1 had MS1 of 1195 $\mu$mol/g, MS2 of 558, and MS1/MS2 of 2.1.

(2) Elemental Analysis

The endothermic material of Preparation Example 1 was analyzed with respect to each content of aluminium element and phosphorus element based on 100 wt% of a total weight of the endothermic material through inductively coupled plasma atomic emission spectroscopy (ICP-AES, Product name: Agilent 5110 VDV, Manufacturer: Agilent Technologies).

The measurement results show that the endothermic material of Preparation Example 1 had an amount of an aluminum element content of 17 wt% and a phosphorus element content of 20 wt% based on 100 wt% of the total amount of the endothermic material.

(3) BET Specific Surface Area

The endothermic material of Preparation Example 1 was measured with respect to a BET specific surface area according to JIS K6217-2 by using a gas adsorption measuring apparatus (Product name: BELSORP, Manufacture: MicrotracBEL Corp.).

The measurement result shows that the endothermic material of Preparation Example 1 had a BET specific surface area of 35 m$^2$/g.

(4) D50 Particle Diameter and D90 Particle Diameter

The endothermic material of Preparation Example 1 was measured with respect to a D50 particle diameter at 50% of a particle diameter distribution and a D90 particle diameter at 90% of the particle diameter distribution under the following conditions, by using particle diameter measuring apparatus (Product name: MT3300, Manufacturer: MicrotracBEL Corp.) according to a laser diffraction method.

Permeability: Permeable
Shape: Non-spherical
Circulation speed: 7
Measurement time: 30 seconds
Number of repetitions: 3
Refractive index: a. endothermic material:1.65; b. ethanol solvent: 1.36

As a result of the measurement, the endothermic material of Preparation Example 1 had a D50 particle diameter of 0.8 $\mu$m and a D90 particle diameter of 3.5 $\mu$m.

**Example 1**

(1) Manufacturing of Positive Electrode

LiFePO$_4$ (D50: 1.2 $\mu$m) and polyvinylidene fluoride as a first binder were mixed in a weight ratio of 92.5:7.5, and subsequently dispersed in N-methyl pyrrolidone to prepare a first safety functional layer slurry.
The first safety functional layer slurry was coated on a 10 $\mu$m-thick Al foil and dried at 110 °C to form a first safety functional layer.
The endothermic material of Preparation Example 1 and polyvinylidene fluoride as a second binder were mixed in a weight ratio of 87:13, and subsequently dispersed in N-methyl pyrrolidone to prepare a second safety functional layer slurry.
The second safety functional layer slurry was coated on the first safety functional layer, and subsequently dried at 110 °C to form a second safety functional layer.
A positive electrode active material of LiCoO$_2$, a binder of polyvinylidene fluoride, and a conductive material of ketjen black were mixed in a weight ratio 98.5:0.75:0.75, and subsequently dispersed in N-methyl pyrrolidone to a prepare positive electrode active material slurry.
The positive electrode active material slurry was coated on the second safety functional layer, and subsequently dried at 110 °C to form a positive electrode active material layer.
As shown above, the first safety functional layer, the second safety functional layer, and the positive electrode active material layer were sequentially formed on the Al foil and pressed to obtain a positive electrode.
Finally, in the obtained positive electrode, the first safety functional layer had a thickness of 2.5 $\mu$m, the second safety functional layer had a thickness of 0.5 $\mu$m, and the positive electrode active material layer had a thickness of 40 $\mu$m.

(2) Manufacturing of Rechargeable Lithium Battery Cell

A mixture of artificial graphite and silicon particles in a weight ratio of 93.5:6.5 as a negative electrode active material, a styrene-butadiene rubber binder, and carboxylmethyl cellulose were mixed in a weight ratio of 97:1:2, and subsequently dispersed in distilled water to prepare a negative electrode active material slurry.
The negative electrode active material slurry was coated on a 6 $\mu$m-thick Cu foil, dried at 100 °C, and pressed to manufacture a negative electrode.
The manufactured positive and negative electrodes were assembled with a 10 $\mu$m-thick polyethylene separator to manufacture an electrode assembly, the electrode assembly was inserted into a pouch with a width of 5.9 cm, a length of 7.8 cm, and a thickness of 5.4 mm as a battery case, and an electrolyte was injected thereinto to manufacture a rechargeable lithium battery cell.
The electrolyte was prepared by dissolving 1.3 M LiPF$_6$ in a mixed solvent of ethylene carbonate (EC), polypropylene (PP), and propylene carbonate (PC) in a volume ratio of 1:1:1.

**Example 2**

A positive electrode and a rechargeable lithium battery cell were manufactured in the same manner as in Example 1, with a difference that the thickness of the first safety functional layer was changed to 2 $\mu$m, and the thickness of the second safety functional layer was changed to 1 $\mu$m.

### Example 3

A positive electrode and a rechargeable lithium battery cell were manufactured in the same manner as in Example 1, with a difference that the thickness of the first safety functional layer was changed to 1.5 $\mu$m, and the thickness of the second safety functional layer was changed to 1.5 $\mu$m.

### Example 4

A positive electrode and a rechargeable lithium battery cell were manufactured in the same manner as in Example 1, with a difference that the thickness of the first safety functional layer was changed to 1 $\mu$m, and the thickness of the second safety functional layer was changed to 2 $\mu$m.

### Example 5

A positive electrode and a rechargeable lithium battery cell were manufactured in the same manner as in Example 1, with a difference that the thickness of the first safety functional layer was changed to 0.5 $\mu$m, and the thickness of the second safety functional layer was changed to 2.5 $\mu$m.

### Example 6

A positive electrode and a rechargeable lithium battery cell were manufactured in the same manner as in Example 1, with a difference that the second safety functional layer, the first safety functional layer, and the positive electrode active material layer were sequentially formed on an Al foil.

### Comparative Example 1

(1) Manufacturing of Positive Electrode

A positive electrode active material of $LiCoO_2$, a binder of polyvinylidene fluoride, and a conductive material of Ketjen black were mixed in a weight ratio of 98.5:0.75:0.75, and subsequently dispersed in N-methyl pyrrolidone to prepare positive electrode active material slurry.
The positive electrode active material slurry was coated on an Al foil and then, dried at 110 °C, and pressed to obtain a positive electrode.
In the obtained positive electrode, a positive electrode active material layer had a thickness of 45 $\mu$m.

(2) Manufacturing of Rechargeable Lithium Battery Cell

A rechargeable lithium battery cell was manufactured in the same manner as in Example 1, with a difference that the positive electrode was used.
For reference, the positive electrodes according to Examples 1 to 6 and Comparative Example 1 are summarized in Table 1 below.

Table 1

| | | Positive electrode structure | Endothermic material | Thickness (μm) | |
| | | | | First safety functional layer | Second safety functional layer |
|---|---|---|---|---|---|
| | Example 1 | positive electrode current collector/first safety functional layer/second safety functional layer/positive electrode active material layer | Composite of Al(OH)$_3$ and methyl phosphinic acid | 2.5 | 0.5 |
| | Example 2 | | | 2 | 1 |
| | Example 3 | | | 1.5 | 1.5 |
| | Example 4 | | | 1 | 2 |
| | Example 5 | | | 0.5 | 2.5 |
| | Example 6 | positive electrode current collector/second safety functional layer/first safety functional layer/positive electrode active material layer | | 2.5 | 0.5 |
| | Comparative Example 1 | positive electrode current collector/positive electrode active material layer | - | - | - |

**Evaluation Example 1: Nail Penetration Test**

Ten (10) sets of each of the rechargeable lithium battery cells of Examples 1 to 6 and Comparative Example 1, which were made to SoC (State of charge) 100%, were prepared.

The rechargeable lithium battery cells were penetrated through their central portions by a nail with a diameter of 3 mm at 150 mm/s. Each 10 rechargeable lithium battery cells were tested to evaluate a ratio (%) of ignited rechargeable lithium battery cells after penetrated by the nail, and the results are shown in Table 2 below.

**Evaluation Example 2: Electrode Interface Resistance Measurement**

For the rechargeable lithium battery cells of Examples 1 to 6, and Comparative Example 1, the interface resistance of the positive electrodes was obtained by a resistance analyzer (Analyzer Product name: 46 pin resistance meter, Manufacturer: Hioki E.E. Corp.). The interface resistances of the positive electrodes are shown in Table 2 below.

**Evaluation Example 3: Room-temperature Cycle-life and High-temperature Cycle-life Evaluation**

The rechargeable lithium battery cells of Examples 1 to 6 and Comparative Example 1 were charged and discharged under the following conditions to evaluate cycle characteristics, and the results are shown in Table 2 below.

The cells were 200 cycles charged at 1.0 C and (CC/CV, 4.47 V, Cut-off at 0.1 C) and discharged at 1.0 C (CC, Cut-off at 2.75 V) at 25 °C to calculate a capacity retention rate according to Equation 2.

Independently of this, the cells were 200 cycles charged at 1.0 C (CC/CV, 4.47 V, Cut-off at 0.1 C) and discharged at 1.0 C (CC, Cut-off at 2.75 V) at 45 °C to calculate a capacity retention rate according to Equation 2.

Capacity retention rate = (discharge capacity after 200 cycles / discharge capacity after 1 cycle) * 100     [Equation 2]

Table 2

| | Nail penetration test (%) | Interface resistance ($\Omega cm^2$) | Room-temperature cycle-life (%) | High-temperature cycle-life (%) |
|---|---|---|---|---|
| Example 1 | 20 | 0.18 | 91.9 | 88.4 |
| Example 2 | 0 | 0.33 | 90.5 | 86.2 |
| Example 3 | 30 | 0.42 | 87.8 | 80.7 |
| Example 4 | 50 | 0.66 | 84.2 | 75.3 |

(continued)

|  | Nail penetration test (%) | Interface resistanc e ($\Omega cm^2$) | Room-temperature cycle-life (%) | High-temperature cycle-life (%) |
|---|---|---|---|---|
| Example 5 | 80 | 0.94 | 82.0 | 71.8 |
| Example 6 | 30 | 0.23 | 90.2 | 85.8 |
| Comparative Example 1 | 100 | 0.055 | 88.7 | 90.7 |

## Summary

Referring to Table 2, the positive electrodes according to some example embodiments, which were represented by Examples 1 to 6, ensured safety by reducing or suppressing heat generation and ignition of the rechargeable lithium battery cells in various situations such as, e.g., penetration by sharp objects, exposure to a high temperature, and the like.

The positive electrode of Comparative Example 1 included no safety functional layer, but the positive electrodes of Examples 1 to 6 included the safety functional layer of a first safety functional layer including a lithium iron phosphate-based compound and a second safety functional layer including an endothermic material.

For example, the positive electrode of Comparative Example 1 exhibited low interface resistance due to absence of the lithium iron phosphate-based compound, and a 100% probability of ignition in the nail penetration test due to absence of the endothermic material.

In contrast, the positive electrodes of Examples 1 to 6 exhibited high interface resistance due to presence of the lithium iron phosphate-based compound, and a 50% or less probability of ignition in the nail penetration test due to presence of the endothermic material.

Accordingly, the positive electrodes according to some example embodiments, which were represented by Examples 1 to 6, improved safety by reducing or suppressing exothermicity and ignition of the rechargeable lithium battery cells in various situations such as, e.g., penetration of sharp objects, exposure to a high temperature, and the like.

For reference, the higher the interface resistance of positive electrodes, the more improved the safety of rechargeable lithium batteries, but the more deteriorated the cycle-life characteristics because of a trade-off relationship of the safety and the cycle-life characteristics. Accordingly, considering the trade-off characteristics, a thickness ratio of the first safety functional layer and the second safety functional layer may be appropriately controlled.

For example, the thickness ratio of the first safety functional layer and the second safety functional layer may be 10:1 to 1:10, 5:1 to 1:5, or 5:1 to 1:1.

Within any of the above ranges, the ignition probability was not only lowered, but also the interface resistance was reduced, improving cycle-life of rechargeable lithium battery cells.

While this disclosure has been described in connection with what is presently considered to be practical example embodiments, it is to be understood that the disclosure is not limited to the disclosed example embodiments, but, on the contrary, is intended to cover various modifications and equivalent arrangements included within the scope of the appended claims.

## <Description of Symbols>

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1.   A positive electrode for a rechargeable lithium battery, the positive electrode comprising:

a positive electrode current collector;

a safety functional layer on the positive electrode current collector; and

a positive electrode active material layer on the safety functional layer,

wherein the safety functional layer includes a first safety functional layer including a lithium iron phosphate-based compound and a second safety functional layer including an endothermic material.

2. The positive electrode as claimed in claim 1, wherein the endothermic material comprises a composite particle including a metal hydroxide and a phosphorus-based flame retardant.

3. The positive electrode as claimed in claim 2, wherein in the endothermic material,

when analyzing the endothermic material using a mass spectrometer according to Thermal Desorption Spectroscopy (TDS),

an amount of $P_2$ gas (MS1) desorbed from 80 °C to 1400 °C is about $200 \times 10^{-6}$ to about $2500 \times 10^{-6}$ mol/g, and

an amount of $H_2O$ gas (MS2) desorbed from 80 °C to 200 °C is about $50 \times 10^{-6}$ to about $1000 \times 10^{-6}$ mol/g.

4. The positive electrode as claimed in claim 3, wherein the endothermic material satisfies Equation 1:

$$0.5 \leq (MS1/MS2) \leq 10.0 \qquad \qquad \text{Equation 1.}$$

5. The positive electrode as claimed in any one of claims 2 to 4, wherein the endothermic material comprises, during analysis using inductively coupled plasma atomic emission spectroscopy (ICP-AES), about 5 wt% to about 30 wt% of an aluminium element and about 5 wt% to about 30 wt% of a phosphorus element based on a total amount of 100 wt% of the endothermic material.

6. The positive electrode as claimed in any one of claims 2 to 5, wherein:

the metal hydroxide comprises at least one of aluminium hydroxide, bohemite, pseudobohemite, alumina, and kaolinite, and

the phosphorus-based flame retardant comprises at least one of phosphoric acid, phosphoric acid ester, phosphonic acid, phosphinic acid, and a derivative thereof.

7. The positive electrode as claimed in any one of claims 1 to 6, wherein the endothermic material has a BET specific surface area of about 8 $m^2$/g to about 150 $m^2$/g.

8. The positive electrode as claimed in any one of claims 1 to 7, wherein the endothermic material has a D50 particle diameter of about 0.05 $\mu$m to about 3 $\mu$m.

9. The positive electrode as claimed in any one of claims 1 to 8, wherein the lithium iron phosphate-based compound is represented by Chemical Formula 1:

$$Li_aFe_{1-x1}M_{x1}PO_4 \qquad \text{Chemical Formula 1}$$

wherein, in Chemical Formula 1,

$$0.90 \leq a \leq 1.8,$$

$$0 \leq x1 \leq 0.7,$$

and M comprises at least one of Mg, Co, and Ni.

10. The positive electrode as claimed in any one of claims 1 to 9, wherein the first safety functional layer further comprises a first binder.

11. The positive electrode as claimed in claim 10, wherein the first binder is included in an amount of about 1 wt% to about 30 wt% based on a total amount of 100 wt% of the first safety functional layer.

12. The positive electrode as claimed in any one of claims 1 to 11, wherein the second safety functional layer further comprises a second binder.

13. The positive electrode as claimed in claim 12, wherein the second binder is included in an amount of about 1 wt% to about 30 wt% based on a total amount of 100 wt% of the second safety functional layer.

14. The positive electrode as claimed in any one of claims 1 to 13, wherein:

(i) a total thickness of the first safety functional layer and the second safety functional layer is about 0.1 $\mu$m to about 3 $\mu$m; and/or
(ii) a thickness ratio of the first safety functional layer and the second safety functional layer is about 10:1 to about 1:10.

15. A rechargeable lithium battery, comprising:

the positive electrode as claimed in any one of claims 1 to 14;
a negative electrode; and
an electrolyte.

【FIG. 1】

【FIG. 2】

【FIG. 3】

【FIG. 4】

Europäisches
Patentamt

European
Patent Office

Office européen
des brevets

# EUROPEAN SEARCH REPORT

**Application Number**

EP 25 16 1285

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 086 982 A1 (ZHUHAI COSMX BATTERY CO LTD [CN]) 9 November 2022 (2022-11-09) | 1,7-11, 14,15 | INV. H01M4/62 |
| A | * example 1 * <br> * figure 1 * <br> ----- | 2-6,12, 13 | H01M4/66 H01M10/42 H01M4/02 |
| X | CN 116 314 842 A (NINGDE AMPEREX TECHNOLOGY LTD) 23 June 2023 (2023-06-23) | 1,9-11, 14,15 | |
| A | * figures 1,2 * <br> * claims 1-6,11,12 * <br> ----- | 2-8,12, 13 | |
| X | CN 117 038 999 A (CHONGQING ZIJIAN NEW ENERGY CO LTD) 10 November 2023 (2023-11-10) | 1,9,14, 15 | |
| A | * figure 1 * <br> * claims 1-7 * <br> ----- | 2-8, 10-13 | |
| A | EP 4 254 594 A1 (SAMSUNG SDI CO LTD [KR]) 4 October 2023 (2023-10-04) <br> * example 1 * <br> * claims 1-4 * <br> ----- | 1-15 | |
| A | MA TENG-KUN ET AL: "Synergistic Flame Retardancy of Microcapsules Based on Ammonium Polyphosphate and Aluminum Hydroxide for Lithium-Ion Batteries", ACS OMEGA, [Online] vol. 6, no. 33, 11 August 2021 (2021-08-11), pages 21227-21234, XP093232960, US ISSN: 2470-1343, DOI: 10.1021/acsomega.1c00598 Retrieved from the Internet: URL:https://pubs.acs.org/doi/pdf/10.1021/acsomega.1c00598> [retrieved on 2025-07-11] * the whole document * <br> ----- | 1-15 | **TECHNICAL FIELDS SEARCHED (IPC)** <br><br> H01M |

The present search report has been drawn up for all claims

| Place of search | Date of completion of the search | Examiner |
|---|---|---|
| Munich | 14 July 2025 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 1285

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2025

| Patent document cited in search report | | Publication date | Patent family member(s) | | Publication date |
|---|---|---|---|---|---|
| EP 4086982 | A1 | 09-11-2022 | CN | 115066767 A | 16-09-2022 |
| | | | EP | 4086982 A1 | 09-11-2022 |
| | | | US | 2022376265 A1 | 24-11-2022 |
| CN 116314842 | A | 23-06-2023 | CN | 116314842 A | 23-06-2023 |
| | | | EP | 4451382 A1 | 23-10-2024 |
| | | | US | 2024332509 A1 | 03-10-2024 |
| CN 117038999 | A | 10-11-2023 | NONE | | |
| EP 4254594 | A1 | 04-10-2023 | CN | 116724439 A | 08-09-2023 |
| | | | EP | 4254594 A1 | 04-10-2023 |
| | | | KR | 20220153949 A | 21-11-2022 |
| | | | US | 2024055687 A1 | 15-02-2024 |
| | | | WO | 2022240211 A1 | 17-11-2022 |

EPO FORM P0459

For more details about this annex : see Official Journal of the European Patent Office, No. 12/82